# EUROPEAN PATENT APPLICATION

(11) **EP 4 494 455 A1**
(43) Date of publication of application: **22.01.2025**
(21) Application number: 23186701.1
(22) Date of filing: 20.07.2023
(51) Int. Cl.: A01G 9/14, A01G 9/22

(54) **GREENHOUSE SCREEN**

(71) Applicant: IFG Exelto NV, 9052 Gent (Zwijnaarde) (BE)
(72) Inventor: PARREIN, Tim, 9041 Oostakker (BE)
(74) Representative: Gevers Patents

(57) **Abstract**

A substantially closed greenhouse screen comprising strips (10) of film material that are interconnected. Each strip extends in a longitudinal direction and has a top surface (10a) and a bottom surface (10b) which are opposite one another. The top surface and/or the bottom surface of the strips is provided with ridges (11) that extend in the longitudinal direction, which ridges form a local thickening of the strip in a transverse cross-section. The ridges improve the humidity transport value in a transhumid environment of the greenhouse screen and the light diffusion.

## Description

### Technical field

The present invention generally relates to a greenhouse screen that functions to provide shade and/or save energy. Greenhouse screens according to the present invention generally comprise a plurality of flexible strips of film material which are interconnected by a yarn framework obtained by means of knitting, warp-knitting or weaving process to form a continuous product. The present invention more specifically relates to an energy saving greenhouse screen suitable for cultivation of crops with high demands on light transmittance, although application to shading and darkening screens is also envisaged.

### Background art

The aims of cultivation in greenhouses are, amongst others, to modify the natural environment to increase yield, to improve product quality, to conserve resources, and/or to extend production areas and/or crop cycles. Depending on the location of the greenhouse and the crop grown therein, the crop needs to be protected during the full or parts of the year to avoid harmful influences that could lower the production.

One known type of greenhouse screens comprises a plurality of flexible strips of film material extending in parallel which are interconnected by a yarn system obtained by means of a knitting, warp-knitting or weaving process to form a continuous product. Such a greenhouse screen is known for example from EP 2 811 818, EP 3 462 839, and WO 2045/181007. The strips of flexible material can be of selected materials providing desired properties with respect to light and/or heat transmission and reflection.

Throughout the present disclosure, the term yarn has to be interpreted in a broad sense and embraces yarns with all kinds of cross-sections and compositions. It therefore does not only embrace yarns with a mainly circular or oval cross-section, such as staple fibre yarn, multifilament yarn, monofilament yarn, etc. but also yarns with a mainly rectangular cross-section such as tape yarn.

Greenhouse screens are frequently used for energy saving, shading and temperature control. Depending on the intended use, such screens must meet a number of requirements. For example, in the context of energy saving screens, light has to pass through the screens to be able to reach the plants. During night time, and especially in the early morning hours, a greenhouse energy saving screen should retain the heat rising from the ground inside the greenhouse. Without a greenhouse energy saving screen the energy consumption tends to increase. Moreover, maintaining the desired climate is difficult.

A disadvantage of energy saving screens is that they form an additional layer in the beam path of the sun. This reduces the amount of light available due to absorption and/or reflection occurring at the screen. The effect of this is typically expressed using the hemispherical transmittance value of the greenhouse screen determined in accordance with the standard NEN 2675:2018+C1 where high values indicate a low loss. As a rule of thumb, it is known that a 1% decrease in hemispherical transmittance value results in a 1% loss in production.

Energy saving screens also tend to diffuse the sunlight. This is usually advantageous as a diffused light tends to also reach lower parts of the plants, thus increasing photosynthesis (i.e. production). Other known advantages of light diffusion are a milder climate and reducing the temperature at the top of the plants on strong sunshine days. The light diffusion is typically expressed using the Hortiscatter value of the greenhouse screen determined in accordance with the standard NEN 2675:2018+C1.

Naturally, for shading or darkening purposes, a totally different hemispherical transmittance value and Hortiscatter value are required. For example, darkening (also known as blackout) greenhouse screens are used to control the length of the day and may be required for bringing short-day plants into blossom. In this application, the light transmittance should be as low as possible with a hemispherical transmittance value of less than 0,1% being preferred for a darkening screen.

Another important property of a greenhouse screen is the water vapor transmission also denoted as the humidity transport. This is an important property to control the humidity level in the greenhouse. For example, a too humid greenhouse can lead to the formation of droplets on the underside of the greenhouse screen which may fall onto the plants. Both a too humid atmosphere and water droplets falling onto the plants should be avoided to prevent diseases and damage to the plants, in particular to the flowers thereof. In the context of greenhouses, humidity transport is typically expressed using the humidity transport value in a transhumid environment determined by the procedure as set out in WUR Report WPR-1099.

A first known way to control the humidity transport is the provision of open spaces (i.e. areas where there are no strips of film material) in the greenhouse screen. However, open areas are detrimental to the energy saving purposes and the darkening purposes of the greenhouse screen.

A second known way to control the humidity transport is the yarn framework used. The yarns used may have a liquid-transporting capacity by capillary action, in order to be able to absorb and distribute condense water along the screen. This allows water (in liquid or vapour state) to be transported from the lower side of the screen to the upper side thereof. This requires specific care to be taken when selecting the yarns and requires a minimal amount of yarns to be present in a given surface area of the greenhouse screen.

### Disclosure of the invention

It is an object of the present invention to provide a greenhouse screen which alleviates one or more of the above-mentioned problems.

This object is achieved according to the present invention by a greenhouse screen comprising strips of film material that are interconnected by a yarn framework obtained by means of knitting, warp-knitting or weaving process to form a continuous product, each strip extending in a longitudinal direction and having a top surface and a bottom surface which are opposite one another, wherein the greenhouse screen is substantially closed, wherein the top surface and/or the bottom surface of the strips is provided with ridges that extend in the longitudinal direction, the ridges forming a local thickening of the strip in a transverse cross-section.

As used herein, the greenhouse screen is considered "substantially closed" when it has an air permeability of less than 500 l/s/m² at a pressure differential of 100 Pa determined by the procedure set out in ISO 9237:1995. Typical air permeability values are between 100 and 220 l/s.m² at a pressure differential of 100 Pa for energy saving greenhouse screens, although lower air permeability values are also possible, e.g. between 30 and 80 l/s.m² for airtight energy saving greenhouse screens or for shading or darkening greenhouse screens (although, in this application, the low air permeability is a side effect of the desired darkening rather than being a desirable technical effect).

The provision of ridges on one or both sides of the strips has been found to lead to two main advantageous technical effects.

Firstly, in the context of greenhouse screens having overlapping strips (be it energy saving screens, shading screens, darkening screens, etc.), the presence of the ridges increases the humidity transport value in a transhumid environment. The inventors theorize that, in the absence of the ridges, the overlapping strips are tightly contacting one another in the overlapping area thus preventing humidity transport. However, due to the ridges, gaps and/or spaces are created between the overlapping strips which aid in capillary transport of the water across the greenhouse screen. The presence of ridges thus improves the humidity transport properties of greenhouse screens having overlapping ridged strips since transport over the strips is now possible without relying solely on transport along the yarn system.

Surprisingly, the presence of ridges did not increase the air permeability across the greenhouse screen, which increase would lead to more energy loss across the greenhouse screen. In fact, the present inventors found that the presence of ridges may even decrease the air permeability across the greenhouse screen, although the decrease is within the normal variance in air permeability measurements. The inventors theorize that the presence of the ridges cause additional obstacles (i.e. air flow path direction changes) for the air flow, when compared to flat tapes having no ridges, thus reducing the air permeability. The presence of ridges therefore also improves the energy saving properties of greenhouse screens having overlapping ridged strips.

Secondly, in the context of energy saving greenhouse screens, the ridges cause an increase in Hortiscatter value while not (significantly) reducing the hemispherical transmittance value. The inventors theorize that the presence of the ridges cause a decreased reflection of the light impinging the top surface of the greenhouse screen. More specifically, the different orientations caused by the ridges, when compared to flat strips, causes a varying angle of incidence of the light rays thereby reducing the amount of reflection. This is turn leaves more light to be transmitted or diffused through the greenhouse screen. As such, the advantages of a diffuse light (e.g. light reaching the lower parts of plants) are amplified while not negatively affecting the hemispherical transmittance value which would cause a production loss.

In an embodiment of the present invention the strips have a minimal thickness determined in the transverse cross-section as the shortest distance between the top surface and the bottom surface, the local thickening caused by one of the ridges having a thickness which is at most 3 times the minimal thickness and in particular at most 2 times the minimal thickness.

In other words, at the location of a ridge, the strip has a total thickness of at most 3 times the minimal thickness. Such local ridges may be formed integrally with the remainder of the strips, e.g. during an extrusion process. Furthermore, the footprint of a ridge (i.e. the width at its base) is usually directly proportional to its height so that higher ridges are also wider thus typically increasing the average thickness of the strips. This is undesirable as a thick screen results in a high bundle size when the screen is folded up (e.g. to the side of the greenhouse) thus wasting volume and reducing the ground area available for plants.

Furthermore, high ridges also limit the number of ridges that can be provided on a given surface area due to the increased footprint. For capillary water transport, it seems advantageous to have more ridges thereby creating many low volume spaces between the strips as opposed to fewer high volume spaces that are achieved by having high ridges.

For energy saving greenhouse screens, the minimal thickness is typically comprised between 10 µm and 60 µm with the minimal thickness being particularly at least 20 µm and more particularly at least 25 µm and the minimal thickness being particularly at most 50 µm and more particularly at most 40 µm. In this application, the thickness is a trade-off between having the desired mechanical properties (e.g. durability, robustness, strength, etc.) and the desired optical properties, namely a high hemispherical transmittance value.

For shading an/or darkening greenhouse screens, the minimal thickness is typically comprised between 20 µm and 300 µm with the minimal thickness being particularly at least 40 µm and more particularly at least 60 µm and the minimal thickness being particularly at most 200 µm and more particularly at most 150 µm. In this application, the hemispherical transmittance value is a key parameter and the thickness/composition of the strips is determined to maximize impinging light reflectance and/or light absorption thereby minimizing the light transmission.

In an embodiment of the present invention for an energy saving greenhouse screen the ridges have a height comprised between 2 µm and 15 µm, particularly between 4 µm and 12 µm and more particularly between 5 µm and 10 µm.

In an embodiment of the present invention for a shading an/or darkening greenhouse screen the ridges have a height comprised between 10 µm and 60 µm, particularly between 20 µm and 40 µm and more particularly between 25 µm and 35 µm.

In an embodiment of the present invention a shortest distance between the crests of two adjacent ridges is comprised between 150 µm and 1000 µm, with the shortest distance being particularly at least 200 µm and more particularly at least 250 µm and the shortest distance being particularly at most 750 µm and more particularly at most 600 µm.

In an embodiment of the present invention the ridges have a footprint determined in a width direction of the strips, the footprint being comprised between 100 µm and 300 µm with the footprint being particularly comprised between 150 µm and 200 µm.

As such, in a preferred embodiment, the ridges are spaced further apart than their footprint, thus reducing the average thickness of the strips when compared to a same height ridges that are separated from one another by a shortest distance comparable to their footprint.

In an embodiment of the present invention the ridges are uniformly spaced along a width direction of the strips thereby achieving substantially uniform light scattering and fluid transport properties in the width direction. Although it should be clear that non-uniform spacing is possible.

In an embodiment of the present invention strips are substantially symmetrical with respect to a middle plane extending in the longitudinal direction. In this way, the top and bottom surface are mirror images of one another. This is particularly advantageous in a greenhouse screen with overlapping strips as the overlapping areas are then substantially the same irrespective of which strip is on top.

In an embodiment of the present invention the strips are translucent or transparent and the greenhouse screen has a hemispherical transmittance determined in accordance with the standard NEN 2675:2018+C1 of at least 71% and preferably at least 73%. This is a so-called energy saving screen which is considered transparent (a hemispherical transmittance of 71%) or highly transparent (a hemispherical transmittance of 73% or more, e.g. 74%, 75% or 76%).

In an embodiment of the present invention the greenhouse screen has a Hortiscatter value determined in accordance with the standard NEN 2675:2018+C1 of at least 20%. This is especially advantageous in combination with a highly transparent greenhouse screen having a hemispherical transmittance of at least 73%.

In an embodiment of the present invention the greenhouse screen has a humidity transport in a transhumid environment of at least 25 g/m²/h determined by the procedure as set out in WUR Report WPR-1099. This is especially advantageous for energy saving greenhouse screens. However, shading and/or darkening greenhouse screens usually have a lower humidity transport in a transhumid environment.

In an embodiment of the present invention a first set of strips are oriented with their longitudinal direction along a warp direction and a second set of strips are oriented with their longitudinal direction along a weft direction, the warp direction strips and the weft direction strips overlapping with one another. Preferably, the greenhouse screen is woven, the warp direction strips and the weft direction strips particularly forming a plain weave, a twill weave or a satin weave. Preferably, the number of strips of film material per unit of length in cross machining direction is substantially equal to the number of strips of film material per unit of length in cross machining direction.

Relying on warp and weft direction strips is a more direct way of obtaining a substantially closed screen when compared to having only warp direction strips which, when interconnected by a yarn system, are more difficult to close at the edges of the strips. This further allows, in the context of darkening screens to achieve a screen having a hemispherical transmittance of substantially zero, i.e. a value smaller than 0,1% or smaller. A plain weave is the most straightforward pattern to weave the strips. In the overlapping regions, the ridges of the strips tend to contact one another or to contact the overlapping strip if this is not provided with ridges on a side. Ideally the first and second strips of film material (i.e. the warp and weft direction strips) may have the same width to provide the best darkening effect since no unnecessary slits are produced in between these strips.

In an embodiment of the present invention all strips are substantially the same.

In an embodiment of the present invention the screen is fire retardant and meets class 1 for fire spread determined in accordance with the NEN NTA 8825:2018 fire test. Such a fire retardancy is important for a safe use of the screen, in particular in greenhouses.

In an embodiment of the present invention the film material is chosen from polymer materials of the group consisting of: polyethylene terephthalate or copolymers thereof, polyethylenes or copolymers thereof, polypropylenes or copolymers thereof, polyvinylidene fluorides or copolymers thereof, polyethene-co-tetrafluoroethene or copolymers thereof, polymethyl methacrylates or copolymers thereof, polylactic acids or copolymers thereof. Additionally, the strips may be provided with a metal foil on one side (usually a non-ridged side) to improve the shading effect and/or the fire retardancy. The film material of these strips is thus a laminate.

In an embodiment of the present invention the strips have a width of at least 0,1 cm, particularly at least 1 cm, more particularly at least 1,5 cm and most particularly at least 2 cm, to obtain sufficient surface coverage under economic conditions.

In an embodiment of the present invention the strips have a width of at most 10 cm, particularly at most 6 cm, particularly at most 5 cm and more particularly at most 4 cm to ensure that the screen remains flexible enough to allow easy installation.

In an embodiment of the present invention the yarn framework comprises multifilament and/or spun yarns. Such yarns may have higher water transporting capacity either by absorption of water in the material of the yarns itself or by capillary action by the pores provided in or between the fibres or filaments of the yarns. This adds to the water transport provided by the ridged design.

The object according to the present invention is also achieved by a use of the greenhouse screen described above in a greenhouse.

It will be readily appreciated that the various embodiments described above (incl. preferred, more preferred, advantageous, more advantageous, alternative, etc. embodiment and/or other optionally indicated features) should not be limited to individual elements, but may be combined with one another to achieve even other embodiments than those already described, which embodiments may also be part of the present invention as defined in the appended claims.

### Brief description of the drawings

The invention will be further explained by means of the following description and the appended figures.
Figure 1 shows a part of warp-knitted greenhouse screen according to an embodiment of the present invention.
Figure 2 shows a part of a warp-knitted greenhouse screen according to an embodiment of the present invention.
Figure 3 shows a part of a woven greenhouse screen according to an embodiment of the present invention.
Figure 4 shows a part of a woven greenhouse screen according to an embodiment of the present invention.
Figures 5A to 5I show cross-sections trough alternative embodiments of strips used in greenhouse screens according to the present invention.

### Description of the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under, left, right, front, back, and the like in the description and the claims are used for descriptive purposes. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

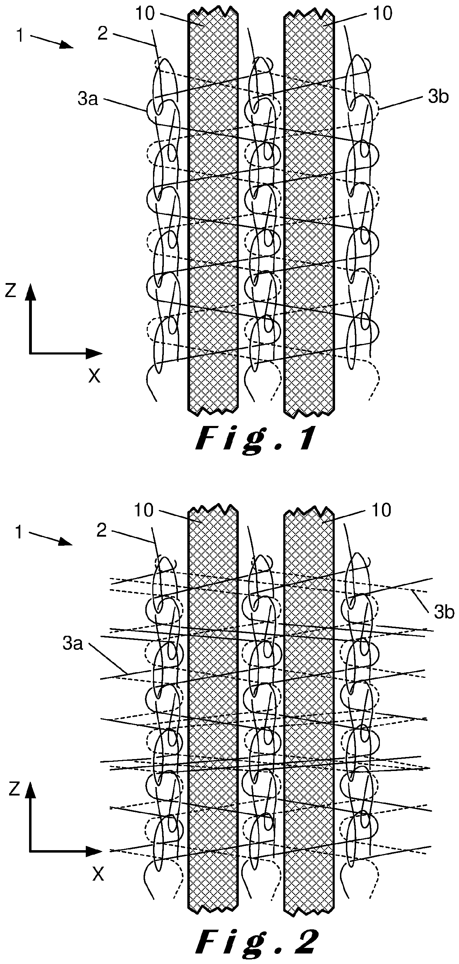

Figures 1 to 4 disclose greenhouse screens 1 which according to the invention comprise a plurality of narrow film strips 10, 10' held together by a yarn framework 2, 3a, 3b; 4, 5; 6, 7. The strips are arranged closely edge to edge or even partially overlapping so that they form a substantially continuous surface resulting in a substantially closed greenhouse screen 1. In figures 1 to 4, the distance between the strips has been exaggerated for the sake of clarity to make the yarn framework visible. The screen 1 has a length direction z, and a width direction x. The strips 10 themselves extend in longitudinal direction. A typical width of the strips is between 0,1 cm and 10 cm with particular limits having been described above. The strips 10, 10' in figure 1 to 4 are shown schematically only. More specifically, the ridges present on at least one side thereof have been omitted to improve the clarity of the figures. However, it should be clear that each strip present in the greenhouse screens illustrated in figures 1 to 4 is provided with ridges on at least its top or bottom side.

In figure 1, the film strips are interconnected by a warp knitting procedure as described in EP 0 109 951. The yarn framework comprises warp threads 2 forming loops or stitches and primarily extending in the length direction z. The warp threads 2 are connected to one another by weft threads 3a and 3b extending across the film strips. Figure 1 shows an example of a mesh pattern for a screen manufactured through a warp knitting process in which four guide bars are used, one for the strips 10, two for the connecting threads 3a, 3b extending transversely to the film strips and one for the longitudinal warp threads 2.

The space between the film strips 10 has been strongly exaggerated in order to make the mesh pattern clear. Usually the film strips are located closely edge to edge to avoid open spaces which are disadvantageous as described above. The longitudinal warp threads 2 are arranged on one side of the greenhouse screen, i.e. the underside, while the transverse connection threads 3a, 3b are located on both sides of the screen, i.e. the top side and the bottom side. The connection between the longitudinal weft threads and the transverse warp threads are usually made on the underside of the fabric. The film strips can in this way be arranged closely edge to edge without being restricted by the longitudinal weft threads.

The longitudinal weft threads 2 in figure 1 extend continuously in an unbroken fashion along opposite edges of adjacent film strips, in a series of knitted stitches, i.e. a so called open pillar stitch formation. The transverse threads 3a, 3b pass above and below the film strips at the same location, i.e. opposed to each other to fixedly trap the film strips. Each knitted stitch in the longitudinal warp threads 2 has two such transverse threads 3a, 3b engaging it.

Figure 2 shows another example of a mesh pattern for a greenhouse screen similar to the one shown in figure 1. The difference is that the transverse threads 3a, 3b pass over film strips 10 in an alternating way.

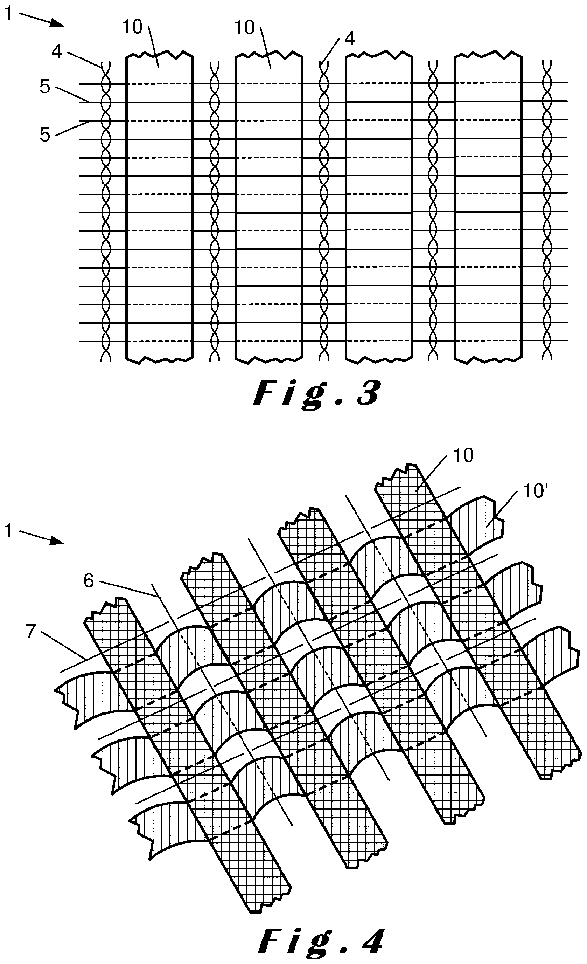

Figure 3 shows a woven greenhouse screen in which the film strips 10 are interconnected by warp threads 4 extending in the length direction z and interwoven with weft threads 5 extending across the film strips primarily in the width direction x.

Figure 4 shows another embodiment of a woven screen as described in US 5,288,545 comprising film strips 10 (warp strips) extending in the length direction z and film strips 10' (weft strips) extending in the width direction x. The weft strips 10' may, as shown in figure 4, always be on the same side of the warp strips 10 or may alternate on the upper and underside of the warp strips 10. The warp and weft strips 10, 10' are held together by a yarn framework comprising longitudinal and transverse threads 6, 7.

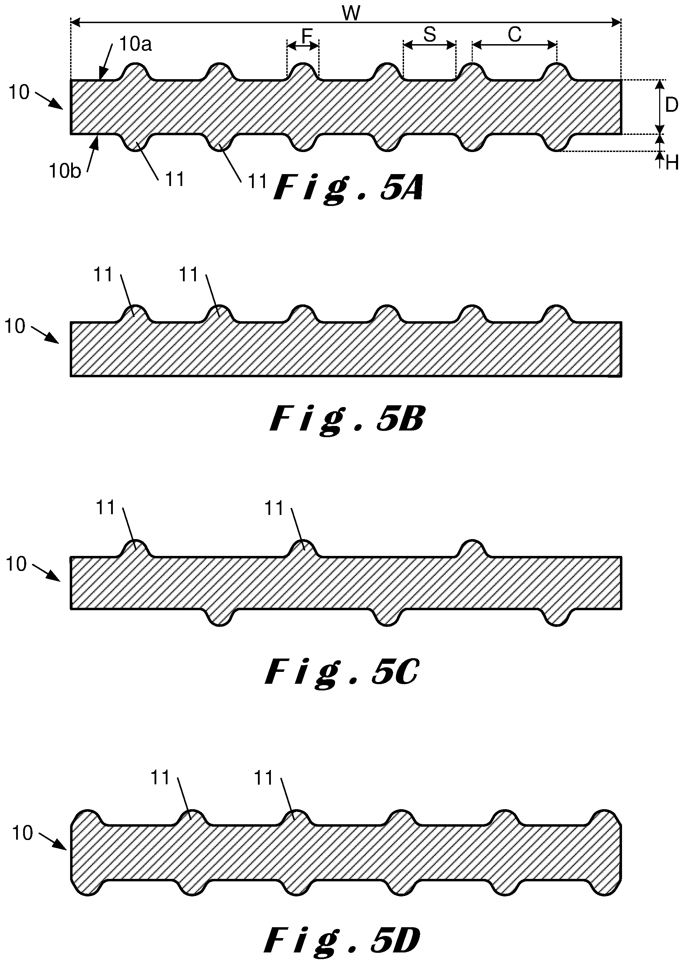

As described above, the present invention is generally directed to the presence of ridges on at least one side of the strips used in forming a greenhouse screen. Various possible strip shapes are shown in figures 5A to 5I.

Figure 5A shows a cross-sectional view through a first embodiment of a strip 10 for use in a greenhouse according to the present invention. The strip 10 has a top surface 10a and a bottom surface 10b which are both provided with ridges 11. The top surface 10a and the bottom surface 10b are mirror images of one another. Figure 5A also indicates the strip minimal thickness D, the ridge footprint F, the ridge separation distance S, the ridge crest separation distance C, the ridge height H, and the strip width W. In the illustrated embodiment of figure 5A, the minimal thickness D is about 30 µm, the ridge height is about 8 µm, the footprint is about 185 µm, the separation is about 270 µm, the crest separation is about 455 µm, and the width is about 3 mm. However, the values may be in general within the limits described above.

Figure 5B shows a cross-sectional view through a second embodiment of a strip 10 for use in a greenhouse according to the present invention. The strip 10 has a top surface 10a provided with ridges 11 and a bottom surface 10b which is flat.

Figure 5C shows a cross-sectional view through a third embodiment of a strip 10 for use in a greenhouse according to the present invention. The strip 10 has a top surface 10a and a bottom surface 10b which are both provided with ridges 11. The ridges on the top surface 10a and the bottom surface 11b are offset with respect to one another.

Figure 5D shows a cross-sectional view through a fourth embodiment of a strip 10 for use in a greenhouse according to the present invention. The strip 10 has a top surface 10a and a bottom surface 10b which are both provided with ridges 11. The ridges 11 are also present on the sides of the strips as opposed to embodiments shown in figures 5A to 5C.

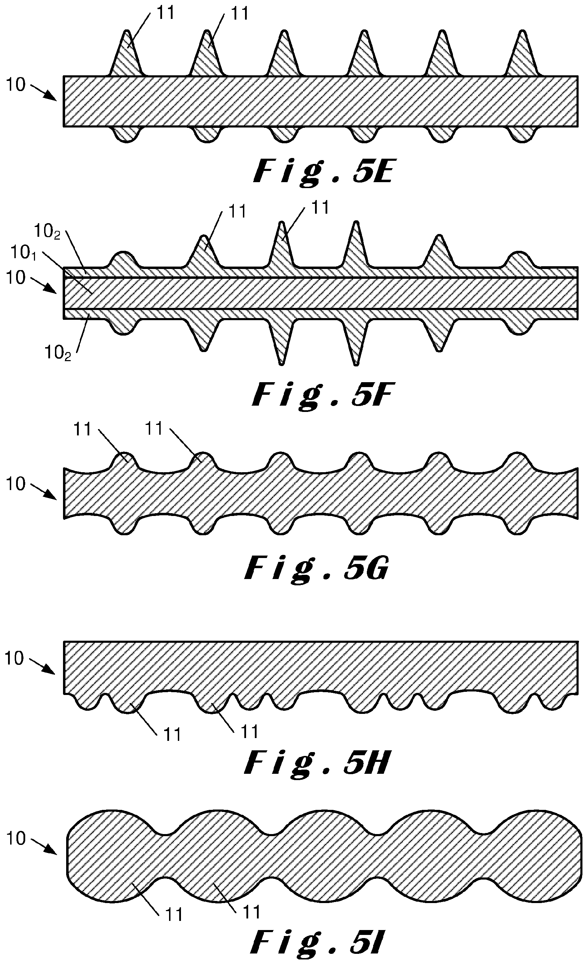

Figure 5E shows a cross-sectional view through a fifth embodiment of a strip 10 for use in a greenhouse according to the present invention. The strip 10 has a top surface 10a and a bottom surface 10b which are both provided with ridges 11. The ridges on the top surface 10a are higher than those on the bottom surface 10b. In this embodiment, the ridges are also not integrally formed with the remainder of the strip. In this way, the ridges can be made from a different material or applied to the core of the strip in an additional production step.

Figure 5F shows a cross-sectional view through a sixth embodiment of a strip 10 for use in a greenhouse according to the present invention. The strip 10 has a top surface 10a and a bottom surface 10b which are both provided with ridges 11. The top surface 10a and the bottom surface 10b are mirror images of one another. The ridges are progressively higher towards the center of the strip. The strip 10 is further made from a laminated material having a core layer 10₁ and outer layers 10₂. The laminate can be obtained by various production methods, e.g. co-extrusion or fixing the outer layers onto the core layer.

Figure 5G shows a cross-sectional view through a seventh embodiment of a strip 10 for use in a greenhouse according to the present invention. The strip 10 has a top surface 10a and a bottom surface 10b which are both provided with ridges 11. The top surface 10a and the bottom surface 10b are mirror images of one another. The main difference with the embodiment of figure 5A is that there are no flat sections between the ridges 11.

Figure 5H shows a cross-sectional view through an eight embodiment of a strip 10 for use in a greenhouse according to the present invention. The strip 10 has a top surface 10a which is flat and a bottom surface 10b having ridges 11. The ridges are non-uniformly spaced and have varying footprints.

Figure 5I shows a cross-sectional view through a ninth embodiment of a strip 10 for use in a greenhouse according to the present invention. The strip 10 has a top surface 10a and a bottom surface 10b which are both provided with ridges 11. The top surface 10a and the bottom surface 10b are mirror images of one another. The main difference with the embodiment of figure 5A is that the ridges 11 have a larger footprint and an increased height.

The strips can be obtained by various manufacturing methods, with (co-)extruding the strips or a film (and then cutting the film) being preferred.

As described above, the strips 10 illustrated in figures 5A to 5I may be used in different kinds of greenhouse screens. More specifically, these may be used in energy saving greenhouse screens, shading greenhouse screens, darkening greenhouse screens, etc. Depending on the intended use, the material of the strips 10 varies.

In general, the film material is chosen from polymer materials of the group consisting of: polyethylene terephthalate or copolymers thereof, polyethylenes or copolymers thereof, polypropylenes or copolymers thereof, polyvinylidene fluorides or copolymers thereof, polyethene-co-tetrafluoroethene or copolymers thereof, polymethyl methacrylates or copolymers thereof, polylactic acids or copolymers thereof. Additionally, the strips may be provided with a metal foil on one side (usually a non-ridged side) to improve the shading effect and/or the fire retardancy. The film material of these first strips is thus a laminate as illustrated in figure 5F.

More details on film material compositions for energy saving greenhouse screens can be found in EP 3 405 022 and EP 3 462 839 which are incorporated herein by reference. More details on film material compositions for darkening greenhouse screens can be found in EP 2 531 020 and WO 2015/181007 which are incorporated herein by reference. Further details on possible on film material compositions for greenhouse screens can be found in EP 2 811 818 which is incorporated herein by reference.

### EXAMPLE 1

In this first example two woven greenhouse screens according to the present invention were produced with strips of film material arranged as a plain weave. The strips of film material were all substantially identical and shaped as illustrated in figure 5A.

As comparative examples, two woven greenhouse screens were produced with strips of film material arranged as a plain weave with strips of film material having no ridges. More specifically, the strips had identical dimensions (width W and thickness D) as figure 5A without the ridges present.

All four screen samples were subjected to the same measurement procedures to determine the hemispherical transmittance value and the Hortiscatter value in accordance with the standard NEN 2675:2018+C1, the humidity transport in a transhumid environment as set out in WUR Report WPR-1099, and the air permeability at a pressure differential of 100 Pa as set out in ISO 9237:1995 at a temperature of 20°C. The results are provided in Table 1 below where the values for "invention" and "comparative" are determined by averaging the measurement results from the respective two samples.

**Table 1: Properties of the greenhouse screen samples**

| Sample | Air permeability (l/s.m²) | Humidity transport (g/m²/h) | Hemispherical transmittance (%) | Hortiscatter (%) |
|---|---|---|---|---|
| Invention | 172 | 26,7 | 73,1 | 27 |
| Comparative | 188 | 23,7 | 73,1 | 13 |

These test results confirm that the presence of ridges improves the Hortiscatter value while maintaining the hemispherical transmittance. As such, light can more easily reach the lower parts of the plants due to the high diffusivity while there is no measurable negative impact on the hemispherical transmittance.

### EXAMPLE 2

In this second example the currently available Phormitex Clear greenhouse screen commercialized by the Applicant was used as a comparative example. This greenhouse screen is a closed energy saving screen having a low air permeability. A similar screen according to the invention was made with the sole difference being the ridges on the tapes shaped as illustrated in figure 5A.

The screen samples were subjected to the same measurement procedures to determine the humidity transport in a transhumid environment as set out in WUR Report WPR-1099 and the air permeability at a pressure differential of 100 Pa as set out in ISO 9237:1995 at a temperature of 20°C. The results are provided in Table 2 below.

**Table 2: Properties of the greenhouse screen samples**

| Sample | Air permeability (l/s.m²) | Humidity transport (g/m²/h) |
|---|---|---|
| Invention | 54 | 16,1 |
| Phormitex Clear | 45 | 9,9 |

Both examples above confirm that the presence of ridges improves the humidity transport while maintaining the air permeability. It should be noted that the differences in air permeability values is within the normal variance and is thus statistically insignificant.

Although aspects of the present invention have been described with respect to specific embodiments, it will be readily appreciated that these aspects may be implemented in other forms within the scope of the invention as defined by the claims.

## Claims

1. A greenhouse screen (1) comprising strips (10, 10') of film material that are interconnected by a yarn framework (2, 3a, 3b; 4, 5; 6, 7), each strip extending in a longitudinal direction and having a top surface and a bottom surface which are opposite one another, wherein the greenhouse screen is substantially closed,
**characterized in that** the top surface (10a) and/or the bottom surface (10n) of the strips is provided with ridges (11) that extend in the longitudinal direction, the ridges forming a local thickening of the strip in a transverse cross-section.

2. A greenhouse screen according to claim 1, **characterized in that** the strips have a minimal thickness (D) determined in the transverse cross-section as the shortest distance between the top surface and the bottom surface, the local thickening caused by one of the ridges having a thickness which is at most 3 times the minimal thickness and in particular at most 2 times the minimal thickness.

3. A greenhouse screen according to claim 2, **characterized in that** the minimal thickness is comprised either:
- between 10 µm and 60 µm with the minimal thickness being particularly at least 20 µm and more particularly at least 25 µm and the minimal thickness being particularly at most 50 µm and more particularly at most 40 µm; or
- between 20 µm and 300 µm with the minimal thickness being particularly at least 40 µm and more particularly at least 60 µm and the minimal thickness being particularly at most 200 µm and more particularly at most 150 µm.

4. A greenhouse screen according to any one of the preceding claims, **characterized in that** the ridges have a height (H) comprised either:
- between 2 µm and 15 µm, particularly between 4 µm and 12 µm and more particularly between 5 µm and 10 µm; or
- between 10 µm and 60 µm, particularly between 20 µm and 40 µm and more particularly between 25 µm and 35 µm.

5. A greenhouse screen according to any one of the preceding claims, **characterized in that** a shortest distance (C) between the crests of two adjacent ridges is comprised between 150 µm and 1000 µm, with the shortest distance being particularly at least 200 µm and more particularly at least 250 µm and the shortest distance being particularly at most 750 µm and more particularly at most 600 µm.

6. A greenhouse screen according to any one of the preceding claims, **characterised in that** the ridges have a footprint (F) determined in a width direction of the strips, the footprint being comprised between 100 µm and 300 µm with the footprint being particularly comprised between 150 µm and 200 µm.

7. A greenhouse screen according to any one of the preceding claims, **characterised in that** the ridges are uniformly spaced along a width direction of the strips.

8. A greenhouse screen according to any one of the preceding claims, **characterised in that** the strips are substantially symmetrical with respect to a middle plane extending in the longitudinal direction.

9. A greenhouse screen according to any one of the preceding claims, **characterised in that** the strips are translucent or transparent and the greenhouse screen has a hemispherical transmittance determined in accordance with the standard NEN 2675:2018+C1 of at least 71% and preferably at least 73%.

10. A greenhouse screen according to any one of the preceding claims, **characterised in that** the greenhouse screen has a Hortiscatter value determined in accordance with the standard NEN 2675:2018+C1 of at least 20%.

11. A greenhouse screen according to any one of the preceding claims, **characterised in that** a first set of strips (10) are oriented with their longitudinal direction along a warp direction and a second set of strips (10') are oriented with their longitudinal direction along a weft direction, the warp direction strips and the weft direction strips overlapping with one another, wherein the greenhouse screen is preferably woven with the warp direction strips and the weft direction strips particularly forming a plain weave.

12. A greenhouse screen according to any one of the preceding claims, **characterized in that** all strips are substantially the same.

13. A greenhouse screen according to any one of the preceding claims, **characterised in that** the film material is chosen from polymer materials of the group consisting of: polyethylene terephthalate or copolymers thereof, polyethylenes or copolymers thereof, polypropylenes or copolymers thereof, polyvinylidene fluorides or copolymers thereof, polyethene-co-tetrafluoroethene or copolymers thereof, polymethyl methacrylates or copolymers thereof, polylactic acids or copolymers thereof.

14. A greenhouse screen according to any one of the preceding claims, **characterised in that** the greenhouse screen is fire retardant and meets class 1 for fire spread determined in accordance with the NEN NTA 8825:2018 fire test.

15. Use of the greenhouse screen according to any one of the preceding claims in a greenhouse.
